# FASCICULE DE BREVET EUROPEEN

(11) **EP 2 384 917 B1**
(45) Date de publication et mention de la délivrance du brevet: **08.07.2015**
(21) Numéro de dépôt: 11305529.7
(22) Date de dépôt: 04.05.2011
(51) Int. Cl.: B60J 5/10, B60Q 1/30, B60Q 1/34, B60Q 1/44, B62D 29/04, B60Q 1/00

(54) **Ensemble modulaire de carrosserie de véhicule automobile**
Modulare Karosserieanordnung eines Kraftfahrzeuges
Body modular assembly of an automobile

(30) Priorité: 05.05.2010 FR 1053497
(43) Date de publication de la demande: 09.11.2011
(73) Titulaire: Faurecia Bloc Avant, 92000 Nanterre (FR)
(72) Inventeur: Gonin, Vincent, 25200, MONTBELIARD (FR)
(74) Mandataire: Domenego, Bertrand

(56) Documents cités:
- EP-A2- 0 899 165
- WO-A2-2006/053547
- DE-A1- 19 822 179

## Description

La présente invention concerne un ensemble modulaire de carrosserie de véhicule automobile.

On connaît déjà dans l'état de la technique, notamment d'après WO 2006/053547, un ensemble de carrosserie de véhicule automobile du type comportant :
- un élément de carrosserie comprenant un élément structurel, un élément de peau porté par l'élément structurel, et un élément de support d'accessoires, agencé dans un logement délimité par l'élément structurel et l'élément de peau, et comportant au moins une zone de fixation d'au moins un accessoire, et
- un assemblage comportant au moins un accessoire, destiné à être fixé dans la zone de fixation.

Un tel ensemble de carrosserie est généralement adapté à un unique modèle de véhicule automobile. En particulier, l'élément de support d'accessoire est adapté aux types et aux formes des accessoires qu'il est destiné à porter. Ainsi, il est nécessaire de prévoir des éléments de carrosserie différents pour des véhicules automobiles de modèles, donc d'esthétiques, différents.

L'invention a notamment pour but de remédier à cet inconvénient en fournissant un ensemble de carrosserie de véhicule automobile pouvant être adapté à différents modèles de véhicule automobile.

A cet effet, l'invention a pour objet un ensemble de carrosserie de véhicule automobile, comportant :
- un élément de carrosserie, du type comportant un élément structurel, un élément de peau porté par l'élément structurel, et un élément de support d'accessoires, agencé dans un logement délimité par l'élément structurel et l'élément de peau, et comportant au moins une zone de fixation d'au moins un accessoire,
- un assemblage comportant au moins un accessoire, destiné à être fixé dans la zone de fixation,
   où la zone de fixation est adaptée pour recevoir l'assemblage dans différentes configurations.
- la zone de fixation comporte des moyens de fixations, réglables selon deux directions répartis sur toute la zone de fixation, choisis parmi : des orifices circulaires ou oblongs, des gorges, des rainures, ou des nervures.

En fournissant une zone de fixation adaptée pour recevoir l'assemblage dans différentes configurations, on permet une gestion modulaire de l'agencement de l'assemblage sur un élément de carrosserie standard.

Un élément de carrosserie selon l'invention présente de préférence une ou plusieurs des caractéristiques suivantes, prises seules ou selon toutes les combinaisons techniquement possibles.

Selon d'autres aspects de l'invention, l'ensemble de carrosserie de véhicule automobile comprend l'une ou plusieurs des caractéristiques suivantes :
- la zone de fixation est adaptée pour recevoir l'assemblage dans une configuration dans laquelle l'assemblage est agencé dans une première position par rapport à l'élément de support, ou dans une configuration dans laquelle l'assemblage est agencé dans une deuxième position par rapport à l'élément de support, différente de la première,
- l'assemblage comporte au moins deux accessoires, la zone de fixation étant adaptée pour recevoir l'assemblage dans plusieurs configurations se différentiant par une position différente d'au moins un accessoire par rapport à l'élément de support de l'assemblage,
- comportant au moins des premier et deuxième assemblages, ces premier et deuxième assemblages présentant une même fonction, mais comportant des accessoires de formes différentes, la zone de fixation étant adaptée pour recevoir indifféremment l'un ou l'autre des premier et deuxième assemblages,
- l'élément de support est venu de matière avec l'élément structurel, ou est rapporté sur l'élément structurel, par exemple par bouterollage, collage, soudage friction ou laser, agrafage, pose d'attaches quart de tour, encliquetage, vissage ou rivetage,
- l'élément de peau est rapporté sur l'élément structurel, par exemple par bouterollage, collage, soudage friction ou laser, agrafage, pose d'attaches quart de tour, encliquetage, vissage ou rivetage,
- l'élément de peau comporte au moins une zone transparente, ménagée en regard de la zone de fixation de l'élément de support, et
- l'élément de carrosserie forme un ouvrant arrière de véhicule automobile, par exemple un battant, un hayon ou une ridelle.

L'invention concerne également une série d'ensembles de carrosserie de véhicule automobile, comprenant des éléments de carrosserie identiques, caractérisé en ce qu'au moins deux ensembles de la série comportent de tels assemblages agencés selon des configurations différentes dans leurs zones de fixation.

L'invention sera mieux comprise à la lecture de la description qui va suivre, donnée uniquement à titre d'exemple, et faite en se référant aux figures annexées dans lesquelles :
- les figures 1 et 2 sont des vues en perspective éclatées d'un ensemble de carrosserie selon un premier exemple de mode de réalisation de l'invention, recevant respectivement des accessoires de formes différentes ;
- la figure 3 est une vue en perspective d'un élément structurel d'un ensemble de carrosserie selon un deuxième exemple de mode de réalisation de l'invention ;
- les figures 4 et 5 sont des vues en perspective d'un élément de peau et d'un accessoire destiné à équiper l'élément structurel de la figure 3, présentant respectivement des accessoires de formes différentes.

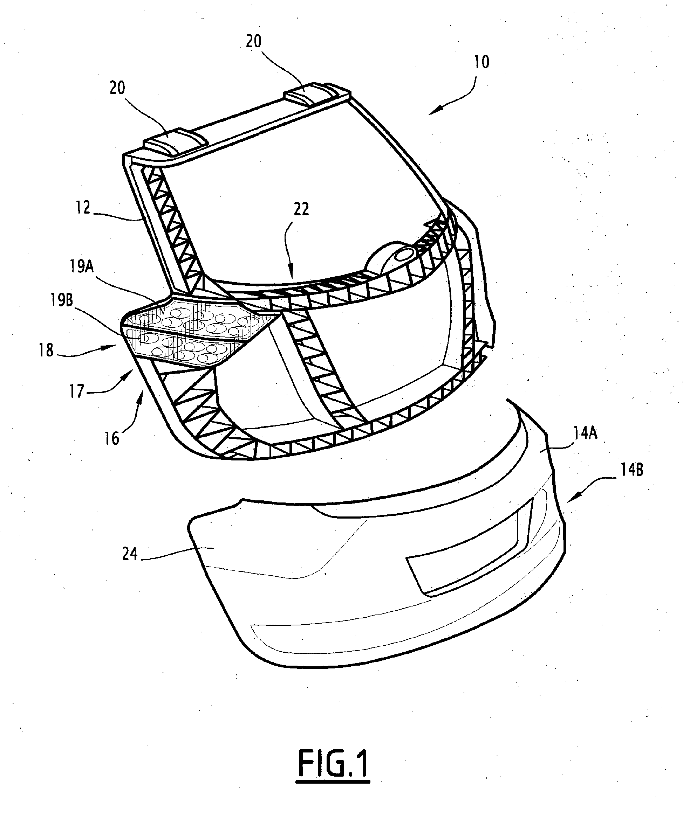

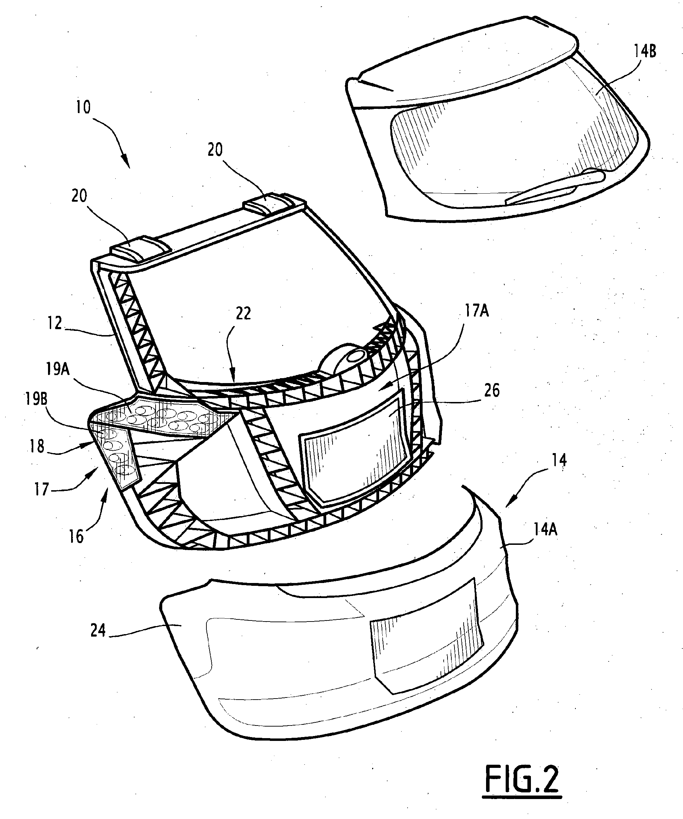

On a représenté sur les figures 1 et 2 un ensemble de carrosserie de véhicule automobile selon un premier mode de réalisation de l'invention, comportant un élément 10 de carrosserie.

Conformément à ce premier mode de réalisation, l'élément de carrosserie 10 forme un ouvrant arrière de véhicule automobile, notamment un hayon, c'est-à-dire un ouvrant articulé à son extrémité supérieure, à proximité du toit du véhicule automobile.

En variante, l'élément de carrosserie 10 pourrait former un battant, c'est-à-dire un ouvrant articulé à une extrémité latérale, ou une ridelle, c'est-à-dire un ouvrant articulé à son extrémité inférieure.

L'élément de carrosserie 10 comporte un élément structurel 12, un élément de peau 14, destiné à être porté par l'élément structurel, et un élément 16 de support d'accessoire, destiné à être agencé dans un logement délimité par l'élément structurel 12 et l'élément de peau 14, et comportant au moins une zone 17 de fixation d'un accessoire, de préférence une pluralité de zones de fixation 17.

L'ensemble de carrosserie comporte également un assemblage 18, comportant au moins un accessoire destiné à être fixé dans une zone de fixation 17. Dans l'exemple représenté, l'assemblage 18 comporte deux accessoires 19A, 19B qui seront décrits ultérieurement.

La partie structurelle 12 forme une ossature de l'élément de carrosserie 10, définissant la forme générale de cet l'élément de carrosserie 10. Cet élément structurel 12 est destiné à assurer la rigidité de l'élément de carrosserie 10, ainsi que sa mobilité.

A cet effet, l'élément structurel 12 comporte des charnières 20, destinées à coopérer avec le châssis du véhicule automobile (non représenté). Avantageusement, l'élément structurel 12 comporte également des organes de serrure (non représentés), destinés à coopérer avec le châssis du véhicule automobile afin de maintenir l'élément de carrosserie 10 en position fermée.

De préférence, l'élément structurel 12 comporte un réseau 22 de nervures d'absorption de chocs, destiné à absorber au moins en partie l'énergie cinétique d'un choc de type Danner, c'est-à-dire équivalent à un choc contre un mur à une vitesse d'environ 16 km/h.

On notera que l'élément structurel 12 peut être indifféremment réalisé en métal (acier ou aluminium), en matière plastique ou en matériau composite.

L'élément de peau 14 est destiné à recouvrir l'élément structurel 12, formant ainsi la partie extérieure et visible de l'élément de carrosserie 10, notamment afin d'assurer une fonction esthétique extérieure du véhicule automobile.

Comme cela est représenté sur la figure 2, l'élément de peau 14 peut comporter un élément de peau inférieur 14A, principalement opaque, formant bandeau arrière, et un élément de peau supérieur 14B, principalement transparent, formant vitre arrière du véhicule automobile.

De préférence, l'élément de peau inférieur 14A comporte au moins une zone transparente 24, ménagée en regard d'une zone de fixation 17 correspondante de l'élément de support d'accessoire 16. Par exemple, chaque zone transparente 24 présente une forme complémentaire de celle d'un accessoire 18 correspondant, de sorte que seul cet accessoire 18 soit visible à travers cette partie transparente 24.

L'élément de peau inférieur 14A, formant panneau de carrosserie, peut être réalisé en métal, notamment en acier ou en aluminium, ou en polymère présentant de bonnes caractéristiques aux chocs, par exemple un alliage de PolyCarbonate et de PolyButylene Terephtalate (PC-PBT), un alliage PolyCarbonate et de Acrylontitrile Butadiene Styrene (PC-ABS), du PolyPropylène (PP), du PolyCarbonate (PC), etc. De préférence, l'élément de peau inférieur 14A est réalisé en matériau transparent, sur lequel on forme des zones opaques, par exemple par dépôt d'un film opaque ou de peinture.

Par ailleurs, l'élément de peau supérieur 14B, formant vitrage arrière, peut être réalisé en verre ou en polymère transparent, tel que du PolyCarbonate ou du Polyméthacrylate de méthyle (PMMA).

Chaque élément de peau 14A, 14B est rapporté sur l'élément structurel 12 à l'aide de moyens de fixation classiques, par exemple par bouterolage, collage, soudage par friction ou par laser, agrafage, pose d'attache quart de tour, encliquetage, vissage ou rivetage.

De préférence, des moyens d'étanchéités, par exemple des joints d'étanchéité, sont agencés entre l'élément structurel 12 et l'élément de peau 14. Ainsi, cet élément structurel 12 et l'élément de peau 14 délimitent un logement étanche pour l'élément de support 16 et l'assemblage 18 d'accessoires. Les accessoires sont donc protégés des dégradations liées à l'environnement extérieur, telles que les dégradations dues à la poussière ou à l'humidité.

Dans l'exemple représenté, l'élément structurel est réalisé en matière plastique.

L'élément de support 16 est par exemple venu de matière avec cet élément structurel 12.

En variante, l'élément de support 16 pourrait être rapporté sur l'élément structurel 12. Dans ce cas, la fixation peut être réalisée par des moyens de fixation classiques, par exemple par bouterolage, collage, soudage par friction ou par laser, agrafage, pose d'attache quart de tour, encliquetage, vissage ou rivetage.

Chaque zone de fixation 17 présente des moyens de fixation d'au moins un accessoire, s'étendant sur toute la zone de fixation 17. Ces moyens de fixation sont choisis parmi des orifices circulaires ou oblongs, des gorges, des rainures ou des nervures, répartis sur toute la zone de fixation 17.

De tels moyens de fixation peuvent être adaptés de manière simple et efficace à la configuration, c'est à dire à la forme générale et/ou à la position souhaitée, de l'assemblage 18 dans la zone de fixation 17. Ainsi, la configuration de l'assemblage 18 n'est pas limitée à une unique configuration prédéterminée, contrairement à un élément de support de l'état de la technique. En d'autres termes, les moyens de fixation sont réglables selon deux directions, de sorte que ces moyens de fixation sont adaptables à la configuration, c'est à dire à la forme générale et/ou à la position souhaitée, de l'assemblage 18 dans lesdites directions.

Chaque accessoire 19A, 19B comporte des moyens de fixation complémentaires de ceux de la zone de fixation 17, par exemple des moyens d'encliquetage destinés à coopérer avec des orifices, des gorges ou des rainures, ou des éléments de pincement destinés à coopérer avec des nervures. On notera que de tels moyens de fixation permettent un montage et un démontage aisés des accessoires 19A, 19B durant la vie du véhicule automobile, notamment lors du remplacement d'accessoires défaillants ou de réparation après des chocs de faible intensité.

On a représenté sur les figures 1 et 2 deux configurations différentes de fixation de l'assemblage 18 dans la zone de fixation 17. En effet, puisque les moyens de fixation s'étendent sur toute la zone de fixation 17, il est aisé d'y trouver des moyens de fixation correspondant à une configuration souhaitée de l'assemblage 18.

Ainsi, les figures 1 et 2 montrent deux configurations respectives se différentiant par une position différente d'au moins un accessoire 19B par rapport aux autres accessoires 19A de l'assemblage 18.

En variante, on pourrait prévoir des configurations dans lesquelles les accessoires de l'assemblage 18 sont agencés dans la même position les uns par rapport aux autres, mais où l'assemblage 18 dans son ensemble est agencé dans des positions différentes par rapport à l'élément de support 16. En effet, les moyens de fixation permettent de choisir de manière simple et efficace le positionnement de chaque accessoire 19A, 19B dans la zone de fixation. II suffit par exemple d'encliqueter chaque accessoire dans des orifices choisis en fonction de la forme de cet accessoire et de la position désirée pour cet accessoire.

Par ailleurs, on peut prévoir, conformément à une autre variante, des premier et deuxième assemblages distincts, présentant une même fonction, mais comportant des accessoires de formes différentes, la zone de fixation étant alors adaptée pour recevoir indifféremment l'un ou l'autre des premier et deuxième assemblages. En effet, il suffit que chaque accessoire présente des moyens de fixation complémentaires de ceux de la zone de fixation 17, quelque soit la forme de l'accessoire.

On notera que, sur ces figures 1 et 2, les accessoires 19A, 19B sont des éléments d'optique. Par exemple, chaque accessoire 19A, 19B forme un assemblage de diodes, comprenant par exemple entre 5 et 15 diodes, disposées selon une forme choisie en fonction par exemple du modèle du véhicule automobile.

Cet assemblage de diodes peut être adapté pour toutes les fonctions d'éclairage d'un véhicule automobile, telles que pour une fonction d'éclairage de nuit, de signalisation, de clignotants, de feux de recul ou de feux antibrouillard.

On notera qu'un tel assemblage de diodes est particulièrement simple et économique à concevoir. II est donc possible de prévoir une grande variété de formes pour un tel assemblage de diodes. L'élément de support 16 selon l'invention est donc particulièrement intéressant, en ce qu'il peut recevoir diverses formes de tels assemblages de diodes sans nécessiter d'adaptation particulière.

Conformément à une variante non représentée, les accessoires de l'assemblage peuvent également être choisis parmi une caméra de recul, une serrure, un boîtier d'optique, un système d'aide au stationnement (par ultrasons ou capacitif), un moteur (par exemple un moteur d'essuie-glace), un dispositif de signalisation, un écran de communication visuelle, une plaque minéralogique, un système d'éclairage (par exemple des feux de signalisation, des clignotants, un système d'éclairage de plaque, etc.), un système de déverrouillage, des câbles de connectique, une antenne radio, ou tout autre accessoire envisageable.

On a par exemple représenté sur la figure 2 un écran de communication 26, pouvant être disposée à une position choisie dans une autre zone de fixation 17A.

Du fait que la zone de fixation 17 autorise la fixation d'un grand nombre de versions de chaque accessoire, et une combinaison variée de ces différents accessoires, il apparaît que l'élément de support 16 peut être standardisé pour différents modèles de véhicules automobiles, seuls les formes et les types d'accessoires variant d'un modèle de véhicule automobile à l'autre.

II est également possible de fournir différents types d'un même accessoire pour un même modèle de véhicule automobile. Dans ce cas, l'élément structurel 12 et l'élément de support 16 peuvent être les mêmes quelque soit la forme de l'accessoire 18, contrairement à un élément de carrosserie de l'état de la technique, pour lequel il est nécessaire de modifier l'élément structurel et les moyens de fixation si l'ont modifie la forme de l'accessoire.

En revanche, l'élément de peau 14 peut nécessiter d'être changé en fonction de l'accessoire, notamment s'il présente des zones transparentes 24 de formes complémentaires à celle des accessoires 18. Toutefois, dans le cas où l'élément de peau 14 est réalisé en un matériau transparent, il est possible d'utiliser le même élément de peau 14 quelle que soit la forme des accessoires 18. En effet, il suffit simplement d'adapter la peinture des zones opaques en fonction des formes de ces accessoires 18.

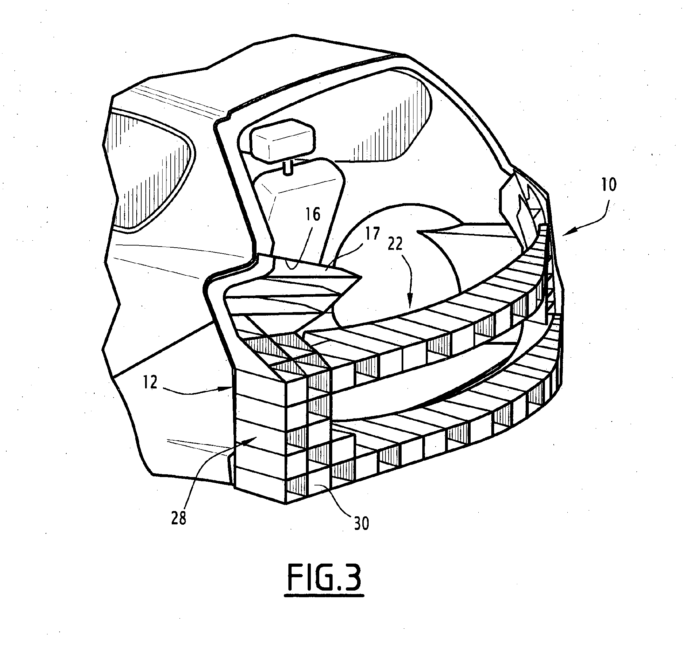

On a représenté sur les figures 3 à 5 un élément de carrosserie 10 de véhicule automobile selon un deuxième mode de réalisation de l'invention Sur ces figures, les éléments analogues à ceux des figures précédentes sont désignés par des références identiques.

Conformément à ce deuxième mode de réalisation, l'élément de carrosserie 10 forme une ridelle.

L'élément structurel 12 comporte des jambages verticaux 28 comprenant des moyens d'absorption de chocs, par exemple des crash-box 30. On notera que, dans l'exemple représenté, l'élément structurel 12 et l'élément de support 16 sont venus de matière.

Dans le cas d'une ridelle, seul l'élément de peau inférieur 14A est fixé à l'élément structurel 12. En effet, l'élément de peau supérieur 14B est généralement articulé à son extrémité supérieure, indépendamment de l'articulation de la ridelle 10.

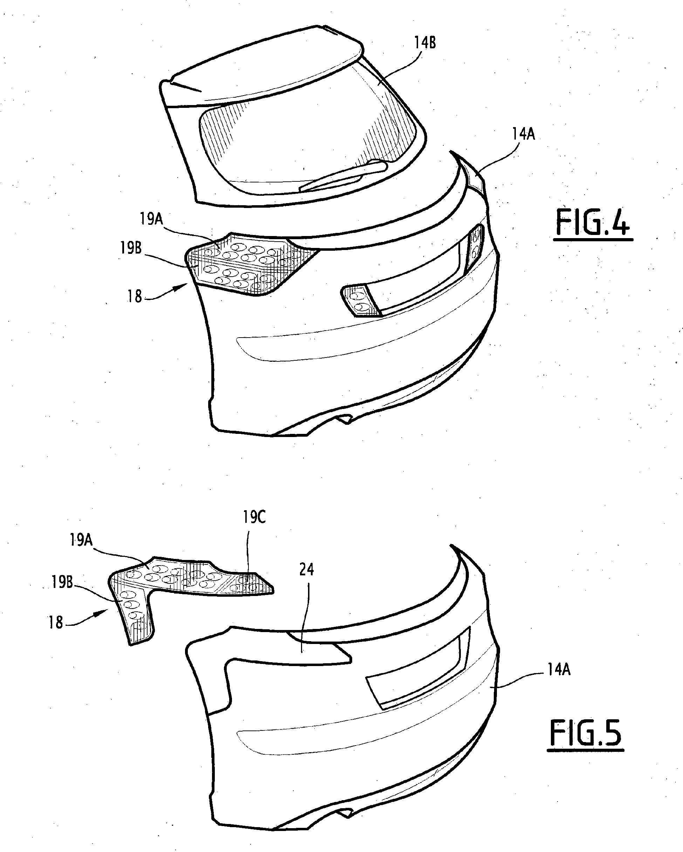

Comme cela est représenté sur les figures 4 et 5, la ridelle 10 peut comporter indifféremment des assemblages 18 de configurations diverses, tels que des assemblages de diodes.

Par exemple, l'assemblage 18 de la figure 5 comporte trois accessoires 19A, 19B, 19C agencés dans une configuration différente de celle des accessoires 19A, 19B de la figure 4.

On notera que l'invention n'est pas limitée au mode de réalisation précédemment décrit mais pourrait présenter diverses variantes sans sortir du cadre des revendications.

En particulier, l'élément de carrosserie pourrait former un ensemble avant du véhicule automobile.

## Revendications

1. Ensemble de carrosserie de véhicule automobile, comportant :
- un élément de carrosserie (10), du type comportant un élément structurel (12), un élément de peau (14) porté par l'élément structurel (12), et un élément (16) de support d'accessoires, agencé dans un logement délimité par l'élément structurel (12) et l'élément de peau (14), l'élément de support comportant au moins une zone (17) de fixation d'au moins un accessoire (18),
- un assemblage (18) comportant au moins un accessoire (19A, 19B), destiné à être fixé dans la zone de fixation (17),
**caractérisé en ce que** :
- la zone de fixation (17) est adaptée pour recevoir l'assemblage (18) dans différentes configurations,
- la zone de fixation (17) comporte des moyens de fixations, réglables selon deux directions, les moyens de fixation étant répartis sur toute la zone de fixation (17), et étant choisis parmi : des orifices circulaires ou oblongs, des gorges, des rainures, ou des nervures.

2. Ensemble selon la revendication 1, dans lequel la zone de fixation (17) est adaptée pour recevoir l'assemblage (18) dans une configuration dans laquelle l'assemblage (18), est agencé dans une première position par rapport à l'élément de support (16), ou dans une configuration dans laquelle l'assemblage (18) est agencé dans une deuxième position par rapport à l'élément de support (16), différente de la première.

3. Ensemble selon la revendication 1 ou 2, dans lequel l'assemblage (18) comporte au moins deux accessoires (19A, 19B), la zone de fixation (17) étant adaptée pour recevoir l'assemblage (18) dans plusieurs configurations se différentiant par une position différente d'au moins un accessoire (19B) par rapport à l'élément de support (16) de l'assemblage (18).

4. Ensemble selon l'une quelconque des revendications précédentes, comportant au moins des premier et deuxième assemblages (18), ces premier et deuxième assemblages (18) présentant une même fonction, mais comportant des accessoires de formes différentes, la zone de fixation (17) étant adaptée pour recevoir indifféremment l'un ou l'autre des premier et deuxième assemblages (18).

5. Ensemble selon l'une quelconque des revendications précédentes, dans lequel l'élément de support (16) est venu de matière avec l'élément structurel (12), ou est rapporté sur l'élément structurel (12), par exemple par bouterollage, collage, soudage friction ou laser, agrafage, pose d'attaches quart de tour, encliquetage, vissage ou rivetage.

6. Ensemble selon l'une quelconque des revendications précédentes, dans lequel l'élément de peau (14) est rapporté sur l'élément structurel (12), par exemple par bouterollage, collage, soudage friction ou laser, agrafage, pose d'attaches quart de tour, encliquetage, vissage ou rivetage.

7. Ensemble selon l'une quelconque des revendications précédentes, dans lequel l'élément de peau (14) comporte au moins une zone transparente (24), ménagée en regard de la zone de fixation (17) de l'élément de support (16).

8. Ensemble selon l'une quelconque des revendications précédentes, dans lequel l'élément de carrosserie (10) forme un ouvrant arrière de véhicule automobile, par exemple un battant, un hayon ou une ridelle.

9. Série d'ensembles de carrosserie de véhicule automobile selon l'une quelconque des revendications précédentes, comprenant des éléments de carrosserie (10) identiques, **caractérisé en ce qu'**au moins deux ensembles de la série comportent des assemblages (18) agencés selon des configurations différentes dans leurs zones de fixation (17).

## Patentansprüche

1. Kraftfahrzeug-Karosserie-Gruppe mit:
- einem Karosserieelement (10) des Typs, der aufweist ein strukturelles Element (12), ein Hautelement (14), das von dem strukturellen Element (12) getragen wird, und ein Element (16) zum Tragen von Zusatzteilen, das in einer Unterbringung angeordnet ist, die von dem strukturellen Element (12) und dem Hautelement (14) begrenzt ist, wobei das Element zum Tragen wenigstens einen Bereich (17) zur Befestigung wenigstens eines Zusatzteils (18) hat,
- einer Baugruppe (18) mit wenigstens einem Zusatzteil (19A, 19B), die dazu bestimmt ist, im Bereich zur Befestigung (17) befestigt zu werden,
**dadurch gekennzeichnet, dass**
- der Bereich zur Befestigung (17) angepasst ist zum Aufnehmen der Baugruppe (18) in unterschiedlichen Konfigurationen,
- der Bereich zur Befestigung (17) Befestigungsmittel aufweist, die in zwei Richtungen einstellbar sind, wobei die Mittel zur Befestigung über den ganzen Bereich zur Befestigung (17) verteilt sind und ausgewählt sind aus: runden oder länglichen Öffnungen, Einschnürungen, Nuten oder Rippen.

2. Gruppe gemäß Anspruch 1, wobei der Bereich zur Befestigung (17) angepasst ist zum Aufnehmen der Baugruppe (18) in einer Konfiguration, in welcher die Baugruppe (18) in einer ersten Position bezüglich des Elements zum Tragen (16) angeordnet ist, oder in einer Konfiguration, in welcher die Baugruppe (18) in einer zweiten Position bezüglich des Elements zum Tragen (16) angeordnet ist, die von der ersten verschieden ist.

3. Gruppe gemäß Anspruch 1 oder 2, wobei die Baugruppe (18) wenigstens zwei Zusatzteile (19A, 19B) aufweist, wobei der Bereich zur Befestigung (17) angepasst ist zum Aufnehmen der Baugruppe (18) in mehreren Konfigurationen, die sich unterscheiden durch eine unterschiedliche Position von wenigstens einem Zusatzteil (19B) bezüglich dem Element zum Tragen (16) der Baugruppe (18).

4. Gruppe gemäß irgendeinem der vorhergehenden Ansprüche, mit wenigstens einer ersten und einer zweiten Baugruppe (18), wobei diese erste und diese zweite Baugruppe (18) die gleiche Funktion haben, aber Zusatzteile unterschiedlicher Formen haben, wobei der Bereich zur Befestigung (17) angepasst ist zum unterschiedslosen Aufnehmen der einen oder der anderen von der ersten und der zweiten Baugruppe (18).

5. Gruppe gemäß irgendeinem der vorhergehenden Ansprüche, wobei das Element zum Tragen (16) aus einem Stück ist mit dem strukturellen Element (12) oder an das strukturelle Element (12) angesetzt ist durch z.B. Nietung, Klebung, Reib- oder Laser-Schweißung, Falzung, Drehriegelverbindung, Rastverbindung, Verschraubung oder Vernietung.

6. Gruppe gemäß irgendeinem der vorhergehenden Ansprüche, wobei das Hautelement (14) an dem strukturellen Element (12) angesetzt ist durch z.B. Nietung, Klebung, Reib- oder Laser-Schweißung, Falzung, Drehriegelverbindung, Rastverbindung, Verschraubung oder Vernietung.

7. Gruppe gemäß irgendeinem der vorhergehenden Ansprüche, wobei das Hautelement (14) wenigstens einen transparenten Bereich (24) aufweist, der dem Bereich zur Befestigung (17) des Elements zum Tragen (16) gegenüberliegend ist.

8. Gruppe gemäß irgendeinem der vorhergehenden Ansprüche, wobei das Karosserieelement (10) einen hinteren Flügel des Kraftfahrzeugs bildet, z.B. einen Fensterflügel, eine Heckklappe oder einen Seitenwandflügel.

9. Serie von Kraftfahrzeug-Karosserie-Gruppen gemäß einem der vorhergehenden Ansprüche, mit identischen Karosserieelementen (10), **dadurch gekennzeichnet, dass** wenigstens zwei Gruppen der Serie Baugruppen (18) aufweisen, die in unterschiedlichen Konfigurationen in ihren Bereichen zur Befestigung (17) angeordnet sind.

## Claims

1. Motor vehicle body assembly, comprising:
- a body element (10), of the type comprising a structural element (12), a skin element (14) borne by the structural element (12), and an accessory support element (16) arranged in a housing delimited by the structural element (12) and the skin element (14), the support element comprising at least one zone (17) for fastening at least one accessory (18),
- a unit (18) comprising at least one accessory (19A, 19B), intended to be fastened in the fastening zone (17),
**characterized in that**
- the fastening zone (17) is designed to receive the unit (18) in different configurations,
- the fastening zone (17) comprises fastening means which can be adjusted in two directions, the fastening means being distributed across the entire fastening zone (17) and being selected from: circular or oblong orifices, channels, grooves or ribs.

2. Assembly according to claim 1, in which the fastening zone (17) is designed to receive the unit (18) in a configuration in which the unit (18) is arranged in a first position relative to the support element (16), or in a configuration in which the unit (18) is arranged in a second position relative to the support element (16), different from the first.

3. Assembly according to claim 1 or 2, in which the unit (18) comprises at least two accessories (19A, 19B), the fastening zone (17) being designed to receive the unit (18) in several configurations which differ by a different position of at least one accessory (19B) relative to the support element (16) for the unit (18).

4. Assembly according to any one of the preceding claims, comprising at least first and second units (18), these first and second units (18) having the same function but comprising accessories of different shapes, the fastening zone (17) being designed to receive either one or the other of the first and second units (18).

5. Assembly according to any one of the preceding claims, in which the support element (16) is formed integrally with the structural element (12), or is attached to the structural element (12), for example by snap-fastening, gluing, friction or laser welding, stapling, quarter-turn fasteners, clip-on mounting, screwing or riveting.

6. Assembly according to any one of the preceding claims, in which the skin element (14) is attached to the structural element (12), for example by snap-fastening, gluing, friction or laser welding, stapling, quarter-turn fasteners, clip-on mounting, screwing or riveting.

7. Assembly according to any one of the preceding claims, in which the skin element (14) comprises at least one transparent zone (24) arranged opposite the fastening zone (17) of the support element (16).

8. Assembly according to any one of the preceding claims, in which the body element (10) forms a motor vehicle rear flap, for example a side-opening tailgate, a hatch or a drop-down tailgate.

9. Series of motor vehicle body assemblies according to any one of the preceding claims, comprising identical body elements (10), **characterized in that** at least two assemblies of the series comprise units (18) arranged in different configurations in their fastening zones (17).
